# EUROPÄISCHE PATENTSCHRIFT

(11) **EP 1 691 323 B1**
(45) Veröffentlichungstag und Bekanntmachung des Hinweises auf die Patenterteilung: **24.03.2010**
(21) Anmeldenummer: 05002651.7
(22) Anmeldetag: 09.02.2005
(51) Int. Cl.: G06Q 10/00

(54) **Datenverarbeitungssystem und Verfahren zum Verarbeiten von Transaktionsinformationen**
Data processing system and method for processing transactional data
Système et méthode de traitement de données de transaction

(43) Veröffentlichungstag der Anmeldung: 16.08.2006
(73) Patentinhaber: Deutsche Post AG, 53113 Bonn (DE)
(72) Erfinder: Kranz, Jürgen, 50374 Erftstadt (DE); Westerweller, Jörg, 51570 Windeck/Rosbach (DE)
(74) Vertreter: Jostarndt, Hans-Dieter

(56) Entgegenhaltungen:
- US-A1- 2003 014 552
- US-A1- 2003 050 972
- US-B1- 6 302 326
- GREG HINKLE: "The Carbon Component Framework Carbon - What is Carbon?"[Online] 13. September 2003 (2003-09-13), Seiten 1-4, Gefunden im Internet: URL:http://web.archive.org/web/20030914132 522/http://carbon.sourceforge.net/printer/ WhatIsCarbon.html> [gefunden am 2007-09-12]
- KUSCHKE, WÖLFEL: "Web Services Kompakt" 2002, SPEKTRUM VERLAG , BERLIN, HEIDELBERG * Seiten 51-77 *

## Beschreibung

Die Erfindung betrifft ein Datenverarbeitungssystem zum Verarbeiten von Transaktionsinformationen mit einem Speichermittel, wobei das Speichermittel als Shared Memory durch einen Speicherbereich eines Computers gebildet ist, der Speicherbereich einen standardisierten Zugriff durch mehrere Clients zulässt und eine Schnittstelle für den Zugriff auf das Shared Memory als Interprozesskommunikationsschicht ausgebildet ist.

Die Erfindung betrifft ferner ein Vorgangsbearbeitungsmodul und ein Verfahren zum Verarbeiten von Transaktionsinformationen.

Aus der amerikanischen Patentschrift US US 6 302 326 B1 ist ein Datenverarbeitungssystem zum Verarbeiten von Transaktionsinformationen mit einem Speichermittel bekannt, wobei das Speichermittel durch einen Speicherbereich eines Computers gebildet ist, wobei ferner der Speicherbereich einen standardisierten Zugriff durch mehrere Clients zulässt und eine Schnittstelle für den Zugriff auf den Speicherbereich als Interprozesskommunikationsschicht ausgebildet ist.

Ein derartiges Datenverarbeitungssystem zum Verarbeiten von Transaktionsinformationen mit einem Speichermittel ist ferner aus der amerikanischen Offenlegungsschrift US 2003/014552 A1 bekannt.

Aus der amerikanischen Offenlegungsschrift US 2003/0088713 A1 ist ein Datenverarbeitungssystem bekannt, das ein Speichermittel enthält, das als Shared Memory durch einen Speicherbereich eines Computers gebildet ist. Der Speicherbereich ermöglicht einen standardisierten Zugriff durch mehrere Clients.

Es ist wünschenswert, ein Datenverarbeitungssystem zu schaffen, das eine schnelle und flexible Verarbeitung von Transaktionsinformationen ermöglicht.

Erfindungsgemäß werden ein Datenverarbeitungssystem nach Anspruch 1 und ein Verfahren nach Anspruch 16 bereitgestellt.

Vorteilhafte Weiterbildungen der Erfindung sind Gegenstand der Patentansprüche 2 bis 15 sowie 17 und 18.

Die Erfindung sieht ein Datenverarbeitungssystem zum Verarbeiten von Transaktionsinformationen mit einem Speichermittel vor, wobei das Speichermittel als Shared Memory durch einen Speicherbereich eines Computers gebildet ist, wobei der Speicherbereich einen standardisierten Zugriff durch mehrere Clients zulässt und wobei eine Schnittstelle für den Zugriff auf das Shared Memory als Interprozesskommunikationsschicht (IPC-Schicht) ausgebildet ist.

Die Erfindung sieht ferner vor, das Datenverarbeitungssystem so auszustatten, dass es Vorgangsbearbeitungsmodule enthält, dass die Vorgangsbearbeitungsmodule so ausgestaltet sind, dass sie Statusinformationen erfassen, dass die von den Vorgangsbearbeitungsmodulen erfassten Statusinformationen in dem Speichermittel hinterlegt werden und dass innerhalb des Shared Memory Speicherbereiche eingerichtet sind, die jeweils einem physischen Port oder einem der Vorgangsbearbeitungsmodule zugeordnet sind.

Durch eine Kombination einer Vorgangsbearbeitung in separaten Vorgangsbearbeitungsmodulen mit der Einführung einer als Abstraktionsschicht wirkenden zusätzlichen Zugriffsschicht für Speicherbereiche wird eine besonders hohe Flexibilität des erfindungsgemäßen Datenverarbeitungssystems beziehungsweise des erfindungsgemäßen Datenverarbeitungsverfahrens erzielt.

Insbesondere ist es hierdurch möglich, eine einzelne Komponente, beispielsweise eine Peripheriekomponente, auszutauschen ohne dass weitergehende Änderungen erforderlich sind. Der Austausch einer Peripheriekomponente durch eine andere Peripheriekomponente erfolgt vorzugsweise durch die Änderung einer Konfigurationsdatei.

Das Ändern oder Hinzufügen einer entsprechenden Konfigurationsdatei ermöglicht auch einen Wechsel anderer Bestandteile des Datenverarbeitungssystems, beispielsweise das Wechseln von Datensenken.

Eine besonders bevorzugte Ausführungsform des Datenverarbeitungssystems, des Vorgangsbearbeitungsmoduls und des Verfahrens zeichnet sich dadurch aus, dass die dem physischen Port oder dem Vorgangsbearbeitungsmodul zugeordneten Speicherbereiche mit einer entsprechenden Identifikationsangabe des physischen Ports oder des Vorgangsbearbeitungsmoduls versehen sind.

Eine besonders bevorzugte Ausführungsform des Datenverarbeitungssystems, des Vorgangsbearbeitungsmoduls und des Verfahrens zeichnet sich dadurch aus, dass die Speicherbereiche des Shared Memory von einem Status Thread beschrieben und/oder inhaltlich verändert werden, wobei der Status Thread dem entsprechenden physischen Port beziehungsweise dem Vorgangsbearbeitungsmodul zugeordnet ist.

Eine besonders bevorzugte Ausführungsform des Datenverarbeitungssystems, des Vorgangsbearbeitungsmoduls und des Verfahrens zeichnet sich dadurch aus, dass die Vorgangsbearbeitungsmodule virtuelle Datencontainer enthalten, die jeweils einem Speicherbereich des Shared Memory entsprechen.

In einer besonders bevorzugten Ausführungsform der Erfindung weist das Vorgangsbearbeitungsmodul neben einer oder mehreren Komponenten zur Erfassung und/oder Bearbeitung von Daten einen Datencontainer zum Speichern von Datenobjekten auf, die insbesondere den Wert der Daten enthalten. Der Datenbestand des Vorgangsbearbeitungsmoduls, der in Form der Datenobjekte vorliegt, kann somit in einfacher Weise gespeichert und, etwa nach einem Systemabsturz, wiederhergestellt werden.

Eine besonders umfassende Datensicherung sowie eine besonders einfache und zuverlässige Datenwiederherstellung lassen sich in einer besonders bevorzugten Ausführungsform der Erfindung dadurch erzielen, dass jedem Datenelement, das von dem Vorgangsbearbeitungsmodul erfasst und/oder verarbeitet wird, ein Datenobjekt zugeordnet wird.

Ferner ist es besonders zweckmäßig, dass der Datencontainer den gesamten Zustand eines Vorgangs enthält.

Zur weiteren Erhöhung der Datensicherheit ist es zweckmäßig, dass die Datenobjekte neben den Daten auch Eigenschaften der Daten enthalten.

Vorzugsweise beschreiben die Eigenschaften der Daten Beschränkungen zugelassener Werte der Daten. Dabei kann es sich bei Daten in einem Zahlenformat beispielsweise um Wertebereiche oder vorgegebene diskrete Zahlenwerte handeln oder es kann eine vorgegebene Minimal- und/oder Maximallänge einer Zeichenkette angegeben werden.

Die Ausführungen für Daten gelten auch für einzelne Datenelemente. Die Verwendung der Pluralform "Daten" stellt keine Festlegung dar, sondern schließt jeweils ausdrücklich auch den Fall ein, dass es sich um ein einzelnes Datenelement handelt.

Das Datenbearbeitungsmodul kann damit schnell und einfach an geänderte Bedingungen angepasst werden, indem die in den Datenobjekten hinterlegten Eigenschaften angepasst werden.

Anhand der in dem Datencontainer enthaltenen Datenobjekte kann auch das Verhalten des Vorgangs vorgegeben werden. Die Konfiguration des Verhaltens ist somit weitgehend von Einstellungen in der Funktionseinheit des Vorgangsbearbeitungsmoduls entkoppelt, so dass die Funktionseinheit in hohem Maße auf Standardoperationen zurückgreifen kann, die für eine Vielzahl von Vorgängen durchgeführt werden.

Die Erfassung von Daten lässt sich innerhalb des Vorgangsbearbeitungsmoduls dadurch realisieren, dass Werte von bestehenden Datenobjekten verändert werden. Gleichfalls ist es jedoch auch möglich, neue Datenobjekte anzulegen und Werte in diese einzutragen. Zur Anzeige von Daten kann ebenfalls auf die Werte des Datencontainers zugegriffen werden.

Die Vorgangsbearbeitungsmodule sind vorzugsweise untereinander modular aufgebaut. Sie können durch Plug&Play-Installation einfach angeschlossen werden, ohne dass die Gesamtapplikation geändert werden muss. Die Vorgangsbearbeitungsmodule greifen auf unterschiedliche Module von Carbon zu. Auch die Basisdienste sind modular aufgebaut.

Durch die Modularstruktur wird eine einfache Integration von neuen Vorgangsarten in das Datenverarbeitungssystem ermöglicht.

Die Erfindung ermöglicht es, Bearbeitungsvorgänge in gekapselte Vorgangsbearbeitungsmodule zu integrieren, wobei eine gegenseitige Beeinflussung der einzelnen Bearbeitungsvorgänge vermieden wird.

Die Erfindung ermöglicht ferner die Realisierung eines Backup/Recovery-Dienstes, welcher dem Benutzer des Retail Clients ermöglicht, nach einem eventuellen Systemausfall seine Arbeit am letzten Arbeitsschritt vor dem Systemausfall fortzusetzen.

Ein wichtiger Vorteil der Erfindung ist ein Einsatz eines Wiederaufsatz-Dienstes, welcher die Möglichkeit bietet, eine Vorgangsart unabhängig vom Bearbeitungsstadium persistent zu speichern, um zu einem späteren Zeitpunkt die Bearbeitung an dieser Stelle des Prozesses fortzuführen.

Ferner beinhaltet die Erfindung eine transaktionierte Ausführung von Vorgangsarten, d. h., eine Vorgangsart kann abgebrochen werden, und die von ihr erstellten Daten in einer beliebigen Session werden gelöscht.

Ferner beinhaltet die Erfindung eine Umsetzung eines generischen Session-Handlings, welches von allen Vorgangsarten transparent verwendet werden kann und die Dienste Backup/Recovery sowie Wiederaufsatz und transaktionierte Vorgangsarten unterstützt. Hierdurch wird die Erstellung beliebiger Session-Hierarchien ermöglicht.

Eine besonders bevorzugte Ausführungsform der Erfindung beinhaltet ein Laufzeitverwaltungssystem zur Integration und Verwaltung der oben genannten Dienste und der zusätzlichen Möglichkeit, dieses Laufzeitverwaltungssystem um beliebige Dienste zu erweitern.

Eine besonders bevorzugte Ausführungsform des Datenverarbeitungssystems, des Vorgangsbearbeitungsmoduls und des Verfahrens zeichnet sich dadurch aus, dass es ein Abfragemodul enthält, dass das Abfragemodul eine Steuerungskomponente aufweist, dass die Steuerungskomponente Steuerbefehle zum Abfragen von Statusinformationen von dem Vorgangsbearbeitungsmodul erhält und dass das Abfragemodul die von dem Vorgangsbearbeitungsmodul empfangenen Statusinformationen in dem Speicherbereich speichert.

Durch diese Ausführungsform der Erfindung wird die Abfrage von Statusinformationen erleichtert. Insbesondere ist es möglich, mit einem Abfragemodul den Status mehrerer Vorgangsbearbeitungsmodule abzufragen.

Ferner ist es zweckmäßig, dass der Speicherbereich durch wenigstens einen Client ausgelesen werden kann, um Statusinformationen über das Vorgangsbearbeitungsmodul zu erhalten.

Hierdurch ist eine Abfrage der Statusinformationen noch schneller und zuverlässiger möglich.

Unter einem Client werden vorzugsweise hier Softwareprogramme und/oder Hardware verstanden, welche die Statusinformationen aus dem Speichermittel auslesen und weiterverarbeiten können. Es kann sich dabei beispielsweise um ein Programm handeln, das in dem Vorgangsbearbeitungsmodul-Host ausgeführt wird, um Programmen oder Geräten, die Bearbeitungsaufträge an den Vorgangsbearbeitungsmodul-Host übermitteln (Vorgangsbearbeitungsmodul-Clients). Statusinformationen zur Verfügung zu stellen. Bei dem Client kann es sich ferner um ein in dem Vorgangsbearbeitungsmodul-Host und/oder den Vorgangsbearbeitungsmodul-Clients ausführbares Programm zum Anzeigen von Statusinformationen auf einem Anzeigemittel oder um ein Datenverarbeitungsprogramm handeln, das die Statusinformationen weiterverarbeitet.

Die Begriffe Status bzw. Statusinformation sind dabei in ihrer weitesten Bedeutung zu verstehen und umfassen insbesondere Informationen darüber, ob das Vorgangsbearbeitungsmodul eingeschaltet (online) oder ausgeschaltet (offline) ist.

Das erfindungsgemäße Datenverarbeitungssystem hat den Vorteil, dass es Statusinformationen eines Vorgangsbearbeitungsmoduls in einem Speichermittel bereitstellt. In dem Speichermittel sind die Statusinformationen jederzeit verfügbar, so dass Statusabfragen insbesondere auch dann durchgeführt werden können, wenn Bearbeitungsdaten an das Vorgangsbearbeitungsmodul übermittelt werden.

Dass die in dem Speichermittel abgelegten Statusinformationen dabei möglicherweise nicht zu jeder Zeit aktuell sind, ist bei vielen Anwendungen nicht nachteilig. Es ist jedoch oft sehr vorteilhaft, dass die Statusinformationen zu jeder Zeit verfügbar sind. Ansonsten wäre es beispielsweise erforderlich, zu Lasten einer oftmals angestrebten schlanken Programmstruktur spezielle Funktionen in Statusinformationen abfragenden Clients zu implementieren, die ausgeführt werden, wenn keine Statusinformationen verfügbar sind. Ferner würde die Bedienung der Clients aufgrund derartiger Funktionen möglicherweise komplizierter sein.

Das Abfragemodul des erfindungsgemäßen Datenverarbeitungssystems verfügt über eine Steuerkomponente zur Abfrage der Statusinformationen von dem Vorgangsbearbeitungsmodul. Eine Anpassung des Datenverarbeitungssystems an ein bestimmtes Vorgangsbearbeitungsmodul-Modell erfordert somit lediglich die Anpassung der Steuerkomponente und kann in einfacher Weise durchgeführt werden.

Ein weiterer Vorteil des Datenverarbeitungssystems besteht darin, dass der Client nicht an ein bestimmtes Vorgangsbearbeitungsmodul-Modell angepasst werden muss, um Statusinformationen abzufragen. Er braucht lediglich über eine Funktion verfügen, die das Auslesen des Speichermittels erlaubt.

Um dabei einer Vielzahl unterschiedlicher Clients den Zugriff auf das Speichermittel zu ermöglichen, umfasst das Datenverarbeitungssystem in einer besonders bevorzugten Ausführungsform der Erfindung eine Standardschnittstelle, über die der Zugriff auf das Speichermittel erfolgt.

Unter einer Standardschnittstelle wird hier eine Schnittstelle verstanden, über die insbesondere eine Vielzahl unterschiedlicher Clients in standardisierter Weise auf das Speichermittel zugreifen kann.

In einer ebenfalls besonders bevorzugten Ausgestaltung der Erfindung weist das Datenverarbeitungssystem ein Datenübertragungsmodul zum Übertragen von Bearbeitungsdaten an das Vorgangsbearbeitungsmodul auf.

Vorzugsweise umfasst das Datenverarbeitungssystem zudem ein Synchronisationsmodul zum Synchronisieren der Abfrage von Statusinformationen von dem Vorgangsbearbeitungsmodul und der Weiterleitung von Bearbeitungsdaten an das Vorgangsbearbeitungsmodul, wobei das Synchronisationsmodul entweder eine Abfrage von Statusinformationen oder eine Weiterleitung von Bearbeitungsdaten zulässt.

Insbesondere bei einer Verwendung der üblichen, eingangs beschriebenen bidirektionalen Vorgangsbearbeitungsmodul-Schnittstelle erlaubt das Synchronisationsmodul eine Synchronisation der Statusabfrage und der Übermittlung von Bearbeitungsdaten. Um eine reibungslose Verarbeitung von Bearbeitungsaufträgen sicherzustellen, kann es dabei beispielsweise vorgesehen sein, dass Statusabfragen nur dann zugelassen werden, wenn keine Bearbeitungsaufträge an das Vorgangsbearbeitungsmodul übermittelt werden.

In einer zweckmäßigen Ausgestaltung der Erfindung ist es zudem vorgesehen, dass das Abfragemodul die Statusinformationen in regelmäßigen Zeitabständen abfragt.

Hierdurch kann eine regelmäßige Aktualisierung der in dem Speichermittel hinterlegten Statusinformationen vorgenommen werden. Werden die Zeitabstände zwischen den Abfragen dabei hinreichend klein gewählt, so liegen ständig quasi-aktuelle Statusinformationen über das Vorgangsbearbeitungsmodul vor.

Vorteilhaft kann das erfindungsgemäße Datenverarbeitungssystem darüber hinaus so weitergebildet werden, dass Statusinformationen von mehreren mit dem Vorgangsbearbeitungsmodul-Host verbundenen Vorgangsbearbeitungsmodulen abgefragt und Bearbeitungsdaten an mehrere Vorgangsbearbeitungsmodule übermittelt werden.

In einer besonders bevorzugten Ausführungsform der Erfindung stellt das Abfragemodul dabei Statusabfragestränge bereit, wobei jeder Statusabfragestrang Statusinformationen von genau einem dem Bearbeitungsstrang zugeordneten Vorgangsbearbeitungsmodul abfragt.

Vorzugsweise ist jedem Statusabfragestrang eine Steuerungskomponente zugeordnet, die Steuerbefehle zum Abfragen von Statusinformationen von dem Vorgangsbearbeitungsmodul enthält, das dem jeweiligen Statusabfragestrang zugeordnet ist.

Die Anpassung der Steuerbefehle an ein bestimmtes Vorgangsbearbeitungsmodul ist damit auch bei Verwendung mehrerer Vorgangsbearbeitungsmodule in einfacher Weise anhand der über den Statusabfragestrang mittelbar dem Vorgangsbearbeitungsmodul zugeordneten Steuerungskomponente möglich.

In einer weiteren besonders bevorzugten Ausgestaltung des Datenverarbeitungssystems stellt auch das Datenübertragungsmodul mehrere Datenübertragungsstränge bereit, wobei jeder Datenübertragungsstrang Bearbeitungsdaten an genau ein dem Datenübertragungsstrang zugeordneten Vorgangsbearbeitungsmodul übermittelt.

Vorteilhaft ist dabei in einer Ausführungsform der Erfindung vorgesehen, dass das Synchronisationsmodul eine Zuordnung zwischen einem Datenverarbeitungsstrang, der einem Vorgangsbearbeitungsmodul zugeordnet ist, und einem demselben Vorgangsbearbeitungsmodul zugeordneten Statusabfragestrang vornimmt.

In einer zweckmäßigen Ausführungsform der Erfindung steuert das Synchronisationsmodul den Statusabfragestrang dabei in Abhängigkeit eines Status des Datenübertragungsstrangs.

Vorzugsweise ist es hier vorgesehen, dass das Synchronisationsmodul den Statusabfragestrang deaktiviert, wenn der demselben Vorgangsbearbeitungsmodul zugeordnete Datenübertragungsstrang aktiv ist.

Hierdurch wird insbesondere eine reibungslose Verarbeitung von Bearbeitungsaufträgen sichergestellt.

Das erfindungsgemäße Verfahren zum Bereitstellen von Statusinformationen über wenigstens ein Vorgangsbearbeitungsmodul zeichnet sich dadurch aus, dass die Statusinformationen von dem Vorgangsbearbeitungsmodul mittels Steuerbefehlen zur Abfrage des Vorgangsbearbeitungsmoduls abgefragt werden, dass die Statusinformationen in ein Speichermittel eingebracht werden und dass das Speichermittel von wenigstens einem Client ausgelesen wird, um Statusinformationen über das Vorgangsbearbeitungsmodul zu erhalten.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Figuren.

Von den Figuren zeigt:
- Fig. 1: eine Prinzipdarstellung eines erfindungsgemäßen Transaktionssystems;
- Fig. 2: eine Prinzipdarstellung von besonders bevorzugten Bestandteilen des erfindungsgemäßen Transaktionssystems und
- Fig. 3: eine Prinzipdarstellung einer weiteren Ausführungsform eines besonders bevorzugten erfindungsgemäßen Transaktionssystems.

Die Erfindung eignet sich insbesondere für einen Einsatz in einem Netzwerk, welches einen oder mehrere Server beinhaltet. Ein Client initialisiert bei seinem Start einen Anwendungsrahmen. Der Client kann dabei eine Plattform mit weiteren Komponenten eines Frameworks wie Datenbanken, Abrechnungsmodule etc. nutzen.

Die Erfindung eignet sich grundsätzlich für einen Einsatz in beliebigen verteilten Systemen, bei denen einzelne Vorgänge in Vorgangsbearbeitungsmodulen durchgeführt werden können. Beispielsweise ist es hierdurch möglich, Messstationen, zum Beispiel zur Überwachung von Umweltschäden, unabhängig voneinander zu betreiben, wobei die einzelnen Messstationen jeweils ein Vorgangsbearbeitungsmodul beinhalten.

In einem besonders bevorzugten Ausführungsbeispiel der Erfindung kann eine als CARBON(Component ARchitecture for Business OptimizatioN)-Plattform bezeichnete Plattform genutzt werden, welche sowohl durch geeignete Hardware-Komponenten (zum Beispiel auf Grundlage programmierbarer elektronischer Bauelemente) als auch unter Einsatz von Software realisiert und auf Datenverarbeitungsanlagen installiert sein kann. Das Framework beinhaltet dabei die Laufzeitbibliothek der Plattform, welche auch als Common Language Runtime bezeichnet wird (CLR). Nach der Initialisierung des Anwendungsrahmens durch den Client initialisiert und startet dieser zweckmäßigerweise den Kern des Frameworks. Vor der Initialisierung des Kerns können Prüfungen durchgeführt werden, welche beispielsweise die Integrität des Programms betreffen. Ferner kann überprüft werden, ob es sich um einen Start oder einen Recovery-Fall handelt, welcher durch einen Abbruch eines Vorganges erzeugt wurde.

Als Client kann grundsätzlich jedes Programm bezeichnet werden, welches das gesamte CARBON-Framework oder auch nur Teile davon nutzt. In erster Linie sind es die Programme, die Vorgangsarten ausführen. Allerdings können auch andere Programme, wie ein CARBON-Host, der beispielsweise als Windows-Service oder als Java-Applikation läuft und Dienste für andere CARBON-Clients zur Verfügung stellt, als Client bezeichnet werden.

Im Folgenden wird auf eine besonders bevorzugte Ausführungsform des Clients eingegangen.

Diese Ausführungsform zeichnet sich dadurch aus, dass es sich um einen Client zur Ausführung von Vorgangsarten handelt.

Ein solcher Client wird beim Start zunächst den Anwendungsrahmen initialisieren. Beim Anwendungsrahmen handelt es sich um die Benutzeroberfläche, in der die Vorgangsarten später ablaufen und durch die mit dem Anwender kommuniziert wird. Der Anwendungsrahmen kann ein Fenster in Windows, eine Web-Site auf einem Server oder auch ein Automaten-Display sein.

Bevor der Client nach der Initialisierung des Anwendungsrahmens den CARBON-Kern initialisiert und startet, können Prüfungen (Beispiel: Recovery-Fall, Integrität der Programme, ) durchgeführt werden. Der Client bestimmt, wie er mit den jeweiligen Prüfungsergebnissen umgeht.

Nachdem der Kern initialisiert und gestartet ist, wird der Client den Kern anweisen, eine Vorgangsart zu starten. Diese Vorgangsart übernimmt danach die Steuerung des Clients.

Der Bereich, in dem die CARBON-Kernfunktionalitäten umgesetzt werden, wird als CARBON-Kern bezeichnet.

Der CARBON Host ist ein Verwaltungsprogramm, in das Services "geplugged" werden.

Damit bietet der CARBON Host zum einen eine Plattform, um Geschäftsprozesse zu realisieren, die unabhängig von einer Desktopanwendung (z.B. EPOS) laufen müssen. Zum anderen ist er dazu geeignet, knappe Ressourcen zu kontrollieren, die sich mehrere Desktopanwendungen teilen müssen (bzw. mehrere Instanzen der gleichen Anwendung).

Eine Datenkomponente ist vorzugsweise im Frontend des Computersystems angeordnet, sie kann jedoch je nach Ausbildung des Systems auch dem Backend zugeordnet werden.

Das Frontend bezeichnet insbesondere einen Arbeitsplatz, an dem ein Mitarbeiter Tätigkeiten ausführt. Beispielsweise nimmt der Mitarbeiter in der Filiale Anforderungen von Kunden entgegen und erfasst Kundendaten und Kundenaufträge, beispielsweise mit Hilfe einer grafischen Benutzungsoberfläche, die den Mitarbeiter bei der vollständigen Eingabe aller erforderlichen Angaben unterstützt.

Das Backend bezeichnet insbesondere ein Hintergrundsystem. In dem Hintergrundsystem werden Vorgänge protokolliert und Kundendaten gespeichert. Darüber hinaus werden in dem Hintergrundsystem Daten gespiegelt und archiviert, insbesondere um die Grundsätze ordentlicher Buchführung zu verwirklichen.

Das Frontend, das Backend und die zu ihrer Verknüpfung eingesetzten Komponenten bilden in einer besonders bevorzugten Ausführungsform ein Filialsystem.

Das Vorgangsbearbeitungsmodul befindet sich vorzugsweise zusammen mit einer Datenkomponente auf dem Client. Dabei können zwischen die Datenkomponente und das Vorgangsbearbeitungsmodul weitere Komponenten oder Funktionseinheiten insbesondere des verwendeten Frameworks geschaltet sein, so dass es sich auch um eine indirekte Verbindung handeln kann.

Bei dem Vorgangsbearbeitungsmodul handelt es sich insbesondere um eine Einheit, welche einen Vorgang oder eine Transaktion eines Gesamtsystems abbildet. Dabei können sowohl abgeschlossene Vorgänge mit einem eindeutigen Anfang und einem eindeutigen Ende als auch offene Vorgänge als Transaktion bezeichnet werden.

Das Vorgangsbearbeitungsmodul bildet elektronisch einen Vorgang oder Geschäftsprozess ab, welcher von dem Vorgangsbearbeitungsmodul abgewickelt wird. Bei den Vorgängen handelt es sich beispielsweise um Transaktionen innerhalb eines Retailsystems, welche im Bereich des Finanz-, Versicherungs-, und Logistikwesens eingesetzt werden. Ferner können auf dem Client mehrere verschiedene Versionen eines Vorgangsbearbeitungsmoduls installiert sein. Beim Starten des Vorgangsbearbeitungsmoduls wird automatisch die Version mit der höchsten Versionsnummer herangezogen. Um dies zu ermöglichen, sind die Vorgangsbearbeitungsmodule zweckmäßigerweise in einer bestimmten Weise in einem Vorgangsbearbeitungsmodul-Verzeichnis abgelegt worden.

In einem bevorzugten Ausführungsbeispiel der Erfindung ist das Vorgangsbearbeitungsmodul ebenfalls an ein Framework angeschlossen, das vorzugsweise objektorientiert und komponentenorientiert ausgebildet ist. Bei dem Framework handelt es sich vorzugsweise um ein API (Application Programming Interface), welches die Funktionalitäten bereitstellt, Clients für verschiedene Assistent-basierte Vorgangsarten zu erstellen. Die von dem Framework zur Verfügung gestellten Funktionalitäten umfassen beispielsweise Kernfunktionalitäten wie das Starten/Beenden des Clients oder der Vorgangsbearbeitungsmodule. Das Framework stellt beispielsweise ein gemeinsames Startmodul zum Starten der Vorgangsbearbeitungsmodule bereit. Ferner unterstützt das Framework die Vorgangsbearbeitungsmodule bei Datenhaltung und Ablaufsteuerung und stellt Komponenten für den Zugriff auf Daten oder zum Bearbeiten bereit. Darüber hinaus werden Basisfunktionalitäten wie die Protokollierung oder die Fehlerbehandlung bereitgestellt.

Als vollständig objektorientierte Programmiersprache innerhalb des Frameworks kann beispielsweise C# verwendet werden. Die objektorientierte Programmierung sieht Objekt-Klasse-Beziehungen vor, wobei eine Klasse ein abstrakter Oberbegriff für Objekte ist, die eine gemeinsame Struktur und/oder ein gemeinsames Verhalten aufweisen. Ein Objekt ist dabei ein zur Laufzeit eines Programms vorhandenes Exemplar einer Klasse, für das Speicherplatz zur Verfügung gestellt wird. Ein Objekt ist eine Instanz einer Klasse. Eine Klasse und damit ihre Objekte werden durch Attribute, Operationen, Zusicherungen und Beziehungen charakterisiert, wobei die Klassen die Attribute und Methoden zu einer Einheit zusammenfassen. Die Attribute sind standardmäßig nur über Methoden der Klasse zugänglich, so dass eine Kapselung oder Zugriffsbeschränkung vorliegt. Eine Klasse kann ferner keine, eine oder mehrere explizite Schnittstellen besitzen, und die Kapselung trennt die Implementierung von der Schnittstelle.

Die Vorgangsbearbeitungsmodule können unterschiedliche Eigenschaften aufweisen. Beispielsweise kann es sich hierbei um feste Prozesseinheiten wie vorgebbare Funktionen handeln, die sich hardwaretechnisch beispielsweise durch speicherprogrammierbare Schaltungen realisieren lassen.

Es ist möglich, dass das Vorgangsbearbeitungsmodul ein eigenständiges Programm ist.

In einem besonders bevorzugten Ausführungsbeispiel der Erfindung ist das Vorgangsbearbeitungsmodul jedoch kein eigenständiges Programm, sondern benötigt zu seiner Ausführung die Infrastruktur eines Clients. Es handelt sich jedoch um eine aktive Komponente, welche beispielsweise das eigene Pausieren und/oder den Start anderer Vorgangsbearbeitungsmodule bewirken kann. Ein Pausieren erfolgt bei einem Arbeitsplatzstack vorzugsweise durch Auflegen eines zusätzlichen Layers.

Einzelne Vorgangsbearbeitungsmodule können im Frontend auf dem Client angeordnet sein, während sich andere Bereiche im Backend, das heißt auf einer zentralen Serverapplikation oder in einem Umsystem befinden können.

Vorzugsweise sind die Vorgangsbearbeitungsmodule wie die Datenkomponente im Frontend angeordnet. Auf dem Computermittel sind vorzugsweise mehrere Vorgangsbearbeitungsmodule installiert, welche jeweils einen Vorgang abbilden. Die Vorgangsbearbeitungsmodule im Frontend oder im Backend des Computersystems können aus mehreren Komponenten bestehen.

In einem besonders bevorzugten Ausführungsbeispiel der Erfindung handelt es sich bei dem Gesamtsystem, in welches die Vorgangsbearbeitungsmodule integriert sind, um ein stark modulares System, in welchem die Vorgänge bis auf kleinste Funktionseinheiten heruntergebrochen sind. Daher kann ein Vorgangsbearbeitungsmodul insbesondere einen Prozess abbilden, welcher Bestandteil mehrerer anderer Vorgangsbearbeitungsmodule ist. Beispielsweise kann ein Vorgangsbearbeitungsmodul das Einscannen eines Barcodes, die Erfassung von Ausweisdaten oder die Berechnung eines Wertes abbilden. Diese Einzelprozesse können als Module von anderen Vorgangsbearbeitungsmodulen aufgerufen werden, so dass sie nur einmalig implementiert werden müssen.

CARBON stellt die technische Plattform (Framework) für die Kundenanwendungen des Filial-Frontends dar. CARBON ermöglicht eine modulare Architektur mit dem Vorteil, dass neue Vorgangsarten einfach und schnell angeschlossen werden können (Plug & Play-Installation), ohne dass die Gesamtapplikation neu erstellt werden müsste. Weiter stellt CARBON die Trennung von Geschäftslogik und Präsentationsschicht sicher und ermöglicht die Integration von Basisdiensten (z. B. Bearbeiten, Benutzerverwaltung). CARBON selbst enthält keine fachlichen Prozesse und Funktionalitäten, diese lagern ausschließlich in den Vorgangsarten und Basisdiensten.

CARBON ist plattformunabhängig und kann auf allen Systemen eingesetzt werden, die eine Einbindung von Applikationen ermöglichen.

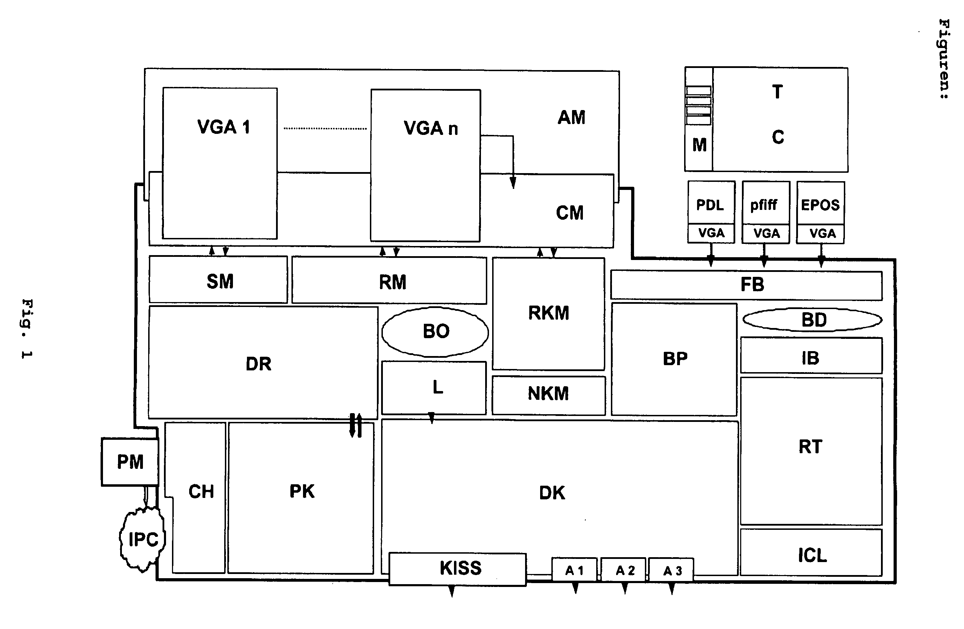

Die CARBON-Software besteht, wie in Fig. 1 dargestellt, aus mehreren Komponenten. Zum Kernel gehören der Application Manager, der Context Manager und eine Funktionsbrücke. Die übrigen Komponenten sind im einzelnen die Berechtigung, der Carbon-Host, die Daten-Komponente, die Bearbeitungskomponente, das Errorhandling, die Informationsbereitstellung, der Model View Controller, das NeKaMo, der Outletlayer, die Peripherie-Komponente, das Recovery/Backup, die Rohdaten, der Session Manager.

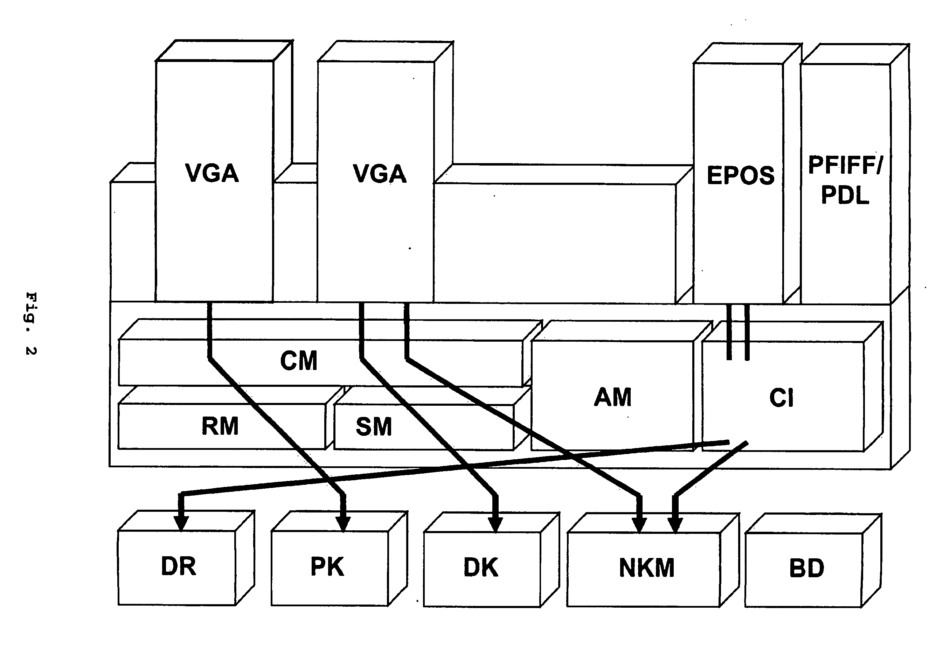

In Fig. 2 ist der Aufbau des EPOS-Clients dargestellt. Die mittlere Schicht spiegelt den Kern des Frameworks wider.

Wie erkennbar, sind die Klassen Application-Manager, Context-Manager, Recovery-Manager und Session-Manager zentrale Schaltstellen des Frameworks.

Eine besonders bevorzugte Ausführungsform der Erfindung sieht vor, einen Context-Manager einzusetzen.

Der Context-Manager ist das zentrale Steuerungselement und der zentrale Dienstanbieter für die Vorgangsarten. Die Ermittlung der zur Verfügung stehenden Dienste realisiert der Context-Manager durch die Abfrage der angebundenen Komponenten über die Schnittstelle ISupportServices.

Die Daten-Container enthalten Elemente des Geschäftsprozesses, das heißt, der Status eines Vorgangsbearbeitsmoduls spiegelt sich in den konkreten Werten auf den Elementen im Daten-Container wider. Die Daten-Container ermöglichen Abgleich und Rückmeldung an die Business Objekte, wenn eine Änderung von Feldinhalten auf der GUI vorgenommen wird. Der Daten-Container kann jederzeit mit weiteren Werten belegt werden, so dass diese validiert werden können.

Diese Erfindung sieht ferner vor, Eingabedaten der Anwender (Retail Client Nutzer) in einem Daten-Container in Elementen abzulegen.

Die erfindungsgemäße Datenablage erhöht die Flexibilität des Systems und die Fehlersicherheit des Systems.

Die eingesetzte Datenkomponente betrifft Datensätze, die mit einer Konfigurationsdatei verbunden sind. Die Konfigurationsdatei ermöglicht einen zentralen Zugriff auf lokal gespeicherte Daten.

In einer besonders bevorzugten Ausführungsform besteht die Datenkomponente aus einer Business-Schicht, einer technischen Verwaltungsschicht und einer technischen Adapterschicht. Die Datenkomponente steuert die Zugriffe auf lokale und im Backend angesiedelte Datenquellen. Hierzu besteht eine Schnittstelle zu einer Benachrichtigungskomponente.

Die erfindungsgemäße Datenkomponente DK umfasst zweckmäßigerweise wenigstens eine Funktionskomponente FK, eine Zugriffskomponente ZK und eine Adapterkomponente AK.

Die Adapterkomponente stellt als Schnittstelle eine Verbindung zwischen der Zugriffskomponente und den verschiedenen Datensystemen her. Die Adapterkomponente kapselt die Zugriffe auf die nativen Schnittstellen der unterstützten Datensysteme und ermöglicht insbesondere die Anbindung von Online- und Offline-Datensystemen. Die Adapterkomponente setzt dabei vorzugsweise direkt auf die Datensysteme oder eine verwendete Middleware auf.

Beispielsweise können entsprechende Adapter für den Zugriff auf verschiedene Datenbanken vorgesehen sein. Durch ein verwendetes Framework können Adapter für den lokalen Datenbankzugriff zur Verfügung stehen. Vorzugsweise wird für jeden Adapter eine entsprechende Datenaktion bereitgestellt.

Die Adapterkomponente umfasst ferner entsprechende Adapter für den Online- und Offline-Zugriff auf Datensysteme. Ist beispielsweise ein Datensystem online ansprechbar, wird ein entsprechender Adapter bereitgestellt. Ist das Datensystem dagegen offline angebunden, ist ein Adapter für den Offline-Zugriff erforderlich.

Ferner ist es vorteilhaft, dass die Datenkomponente DK Adapter A1, A2, A3 enthält, die Daten so aufbereiten, dass sie in anderen Komponenten besser verarbeitet werden können. Beispiele für derartige Adapter sind Schnittstellen zu Datenbanken, beispielsweise SQL-Schnittstellen.

Für die Datenverbindung kann beispielsweise eine Middleware verwendet werden, so dass der Adapter direkt auf diese Middleware aufsetzt. Ist ein Datensystem des Backends, wie in Fig. 1 dargestellt, über eine Benachrichtigungskomponente KISS mit dem Frontend verknüpft, wird für den Zugriff auf dieses Datensystem ebenfalls ein eigener Adapter in der Adapterkomponente bereitgestellt. Dabei kann ebenfalls eine Middleware verwendet werden.

Bei der Middleware handelt es sich insbesondere um eine anwendungsunabhängige Komponente, welche Dienstleistungen zur Vermittlung zwischen Anwendungen anbietet. Eine Middleware stellt eine Ebene in einem komplexen Software-System dar, die als Dienstleister anderen ansonsten entkoppelten Softwarekomponenten die Kommunikation untereinander ermöglicht.

Die Erfindung sieht ferner eine Implementation zusätzlicher Funktionen der Datenstruktur vor.

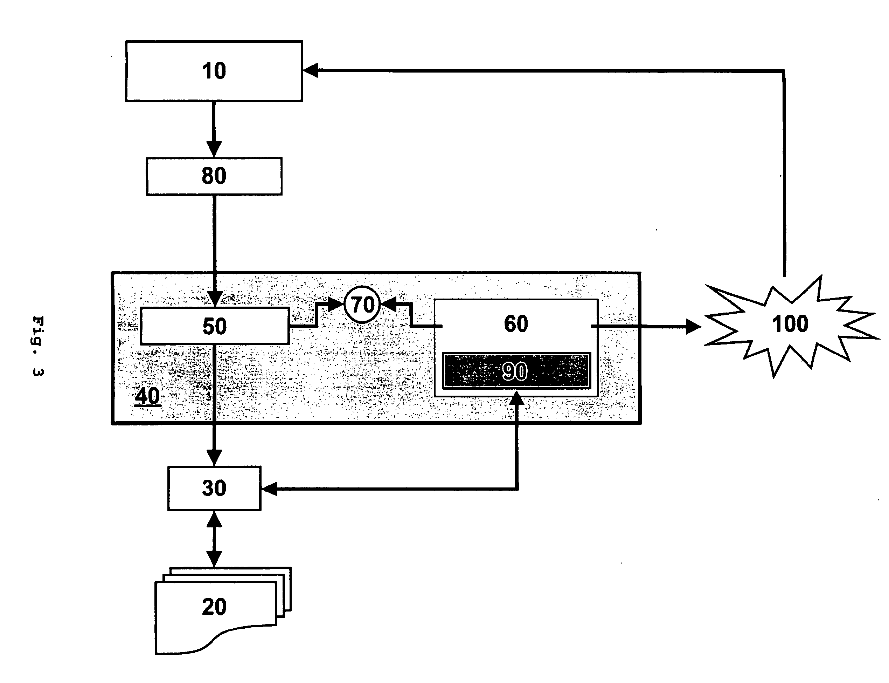

Eine derartige Implementierung zusätzlicher Funktionen in das Datenverarbeitungssystem ist in Fig. 3 dargestellt.

Fig. 3 zeigt eine schematische Darstellung eines erfindungsgemäßen Datenverarbeitungssystems in einer besonders bevorzugten Ausführungsform einschließlich eingesetzter Module.

Die dargestellte Ausführungsform lässt sich gleichfalls in verschiedenen Bereichen einsetzen.

Ein Einsatz in einem Filialsystem eines Dienstleistungsunternehmens ist jedoch besonders bevorzugt.

Es wird davon ausgegangen, dass das Dienstleistungsunternehmen eine Vielzahl von Dienstleistungen, wie insbesondere Finanz- und Logistikdienstleistungen anbietet, für die verschiedene Geschäftsvorgänge durchgeführt werden, die mit dem Bearbeiten geldwerter Informationen verbunden sind. Beispiele hierfür sind: Abbuchungen von Geldbeträgen von einem Sparbuch, Einzahlungen von Geldbeträgen auf ein Sparbuch oder der Verkauf von Postwertzeichen.

Der Fachmann erkennt jedoch, dass die Erfindung keineswegs auf diese Ausführungsbeispiele beschränkt ist, sondern in analoger Weise zur Bereitstellung von Statusinformationen beliebiger Vorgangsbearbeitungsmodule verwendet werden kann.

Das beispielhaft betrachtete Datenverarbeitungssystem verfügt über wenigstens einen Host-Rechner (10), der über mehrere Datenverbindungen mit jeweils einem Vorgangsbearbeitungsmodul (20) verbunden ist.

Bei dem Host-Rechner (10) handelt es sich vorzugsweise um einen Computer, der insbesondere über einen Prozessor zur Durchführung von Berechnungen sowie einen flüchtigen und/oder nichtflüchtigen Speicher verfügt, oder es handelt sich um ein Programm bzw. Programmmodul, das in einem derartigen Computer ausgeführt wird.

Die Datenverbindung zwischen dem Computer und den Vorgangsbearbeitungsmodulen (20) wird über eine dem Fachmann bekannte Schnittstelle hergestellt. Dabei kann es sich beispielsweise um eine parallele, eine serielle oder eine USB (Universal Serial Bus)- Schnittstelle handeln.

Die Schnittstelle ist dabei so ausgebildet, dass eine bidirektionale Datenübertragung möglich ist, d. h., dass sowohl Daten von dem Computer an das Vorgangsbearbeitungsmodul (20) übertragen werden können als auch umgekehrt. Ein Beispiel für eine derartige Schnittstelle ist die Vorgangsbearbeitungsmodul-Schnittstelle IEEE 1284, bei der die Übertragungsrichtung der Datenverbindung umgekehrt werden kann.

Zur Verarbeitung von Bearbeitungsaufträgen, die von Clients an den Vorgangsbearbeitungsmodul-Host übermittelt werden, verfügt der Host-Rechner (20) für jedes der Vorgangsbearbeitungsmodule (20) über einen Treiber, der in den Bearbeitungsaufträgen enthaltene Bearbeitungsdaten in ein Format (Programmiersprache) konvertiert, das von dem jeweiligen Host-Rechner verarbeitet werden kann.

Ferner enthält der Host-Rechner (10) einen Vorgangsbearbeitungsmodul-Spooler, der die Bearbeitungsaufträge mit den konvertierten Bearbeitungsdaten an einen Port übermittelt, der dem für den Bearbeitungsauftrag bestimmten Vorgangsbearbeitungsmodul zugeordnet ist. Dafür werden Angaben über das für den Bearbeitungsauftrag bestimmten Vorgangsbearbeitungsmodul ausgewertet, die Bestandteil des Bearbeitungsauftrages sind und durch die Vorgangsbearbeitungsmodul-Clients in die Bearbeitungsaufträge eingebracht werden.

Bei den Clients handelt es sich bei dem betrachteten Ausführungsbeispiel um Programme bzw. Programmmodule zur Durchführung von Geschäftsvorgängen. Insbesondere handelt es sich dabei um Programme bzw. Programmmodule zur Durchführung der oben genannten Geschäftsvorgänge.

Die Client-Programme werden in einem oder mehreren Computern der vorgenannten Art ausgeführt, die zusätzlich insbesondere über ein Anzeigemittel zum Anzeigen grafischer Darstellungen verfügen und in einer Filiale des Dienstleistungsunternehmens, beispielsweise durch das Personal des Unternehmens, bedient werden. Bei den Computern kann es sich um dieselben Computer handeln, die als Host-Rechner (10) eingesetzt werden, oder um Computer, die beispielsweise über ein Netzwerk mit dem Computer verbunden sind, in dem das Vorgangsbearbeitungsmodul-Host-Programm ausgeführt wird.

Das Datenverarbeitungssystem des dargestellten Datenverarbeitungssystems umfasst darüber hinaus einen Portmonitor (40), der in Fig. 3 in einer bevorzugten Ausführungsform dargestellt ist. Der Portmonitor umfasst in dieser Ausführungsform insbesondere ein Datenübertragungsmodul (50) zum Weiterleiten des von dem Host-Rechner (10) übermittelten Bearbeitungsdatenstroms, ein Abfragemodul (60) zum Abfragen von Statusinformationen und ein Synchronisationsmodul (70) zum Synchronisieren der Weiterleitung von Bearbeitungsdaten und der Abfrage von Statusinformationen.

Ebenso wie der Host-Rechner (10) sind der Portmonitor (40), das Datenübertragungsmodul (50), das Abfragemodul (60) und das Synchronisationsmodul (70) vorzugsweise, jedoch nicht notwendig, als Softwareprogramme ausgeführt. Auf eine sprachliche Unterscheidung zwischen Hardware und Software wird dabei im Folgenden jedoch verzichtet.

Die Bearbeitungsdaten, die von dem Carbon-Host bzw. dem Vorgangsbearbeitungsmodul-Spooler des Carbon-Host an den Portmonitor 40 übermittelt werden, werden von diesem an einem Port (80)entgegengenommen, der im Folgenden als logischer Port bezeichnet wird.

Zwischen einem logischen Port (80) des Portmonitors (40) und einem physischen Port (30) des Computers, auf dem das Host-Programm ausgeführt wird, besteht dabei eine Zuordnung, die in dem Datenübertragungsmodul (50) in einer Konfigurationsdatei hinterlegt ist. Anhand dieser Zuordnung werden Bearbeitungsdaten, die von dem Vorgangsbearbeitungsmodul-Host an einen bestimmten logischen Port (80) übermittelt werden, von dem Datenübertragungsmodul an den entsprechenden physischen Port (30) weitergeleitet.

Zur Erzeugung eines Bearbeitungsauftrags wird in einer bevorzugten Ausführungsform der Erfindung die hierfür vorgesehene Funktionalität des Betriebssystems verwendet. Insbesondere erfolgt die Auswahl eines Vorgangsbearbeitungsmoduls (20) durch den Vorgangsbearbeitungsmodul-Client sowie die Aufbereitung des Bearbeitungsauftrages bzw. der Bearbeitungsdaten anhand der dem Fachmann bekannten Funktionen des Betriebssystems. Ein eingesetzter Spooler des Betriebssystems übermittelt den Bearbeitungsauftrag jedoch nicht in konventioneller Weise an den physischen Port (30), über den das ausgewählte Vorgangsbearbeitungsmodul (20) mit dem Computer verbunden ist, sondern an den logischen Port (80), der dem physischen Port (30) zugeordnet ist.

Hierfür wird insbesondere die Zuordnung zwischen logischen Ports (80) und den physischen Ports bzw. den über die physischen Ports (30) angeschlossene Komponente in einer Registrierungsdatei des Betriebssystems angegeben. Anhand dieser Registrierungsdatei ermittelt der Spooler den logischen Port (80), an den Bearbeitungsaufträge für ein bestimmtes Vorgangsbearbeitungsmodul (20) zu übermitteln sind.

Zur Weiterleitung der von dem Spooler an die logischen Ports (80) übermittelten Bearbeitungsdaten an die physischen Ports (30) stellt das Datenübertragungsmodul (50) Datenübertragungsstränge bereit. Diese sind als Threads ausgeführt, d. h. als sequentielle Prozesse.

Als Main Threads bezeichnete Threads werden vorzugsweise zur selben Zeit unabhängig voneinander durchgeführt.

Jeder Main Thread leitet Bearbeitungsdaten an einen vorgegebenen physischen Port weiter und nimmt dafür die Bearbeitungsdaten von dem logischen Port (80) entgegen, der dem physischen Port anhand der Konfigurationsdatei zugeordnet ist.

Zur Abfrage von Statusinformationen von einem Vorgangsbearbeitungsmodul (20), das an einen vorgegebenen physischen Port (30) angeschlossen ist, ist das Abfragemodul vorgesehen. Das Abfragemodul stellt Statusabfragestränge bereit, die vorzugsweise ebenfalls als Threads ausgeführt sind und im Folgenden als Status Threads bezeichnet werden. Jedem physischen Port (30) ist dabei genau ein Status Thread zugeordnet, der Statusinformationen von diesem physischen Port (30) beziehungsweise dem entsprechenden Vorgangsbearbeitungsmodul abfragt.

Die Statusabfrage erfolgt anhand von Steuerbefehlen, die in Steuerungskomponenten (90) enthalten sind, welche Bestandteile des Abfragemoduls (60) sind. Da für jede Art von Vorgangsbearbeitungsmodulen spezifische Steuerbefehle zur Statusabfrage bereitgestellt werden, ist dabei jedem Status Thread eine eigene Steuerkomponente (90) zugeordnet. Insbesondere wenn mehrere Vorgangsbearbeitungsmodule (20) des gleichen Typs an den Computer angeschlossen sind, können die entsprechenden Status Threads dieselbe Steuerkomponente (90) verwenden.

Neben den Steuerbefehlen für die Statusabfrage stellen die Steuerungskomponenten ebenfalls eine Bearbeitungslogik zur Auswertung der Antwort eines Vorgangsbearbeitungsmoduls (20) bereit, die dieses als Reaktion auf die Statusabfrage an das Abfragemodul (60) übermittelt. Anhand der Verarbeitung der Vorgangsbearbeitungsmodul-Antwort durch die Bearbeitungslogik der Steuerungskomponente (90) können die Statusinformationen von dem Abfragemodul (60) in einem Standardformat bereitgestellt werden, das von dem Vorgangsbearbeitungsmodul-Host und den Vorgangsbearbeitungsmodul-Clients ohne eine vorgangsbearbeitungsmodulspezifische Anpassung interpretiert beziehungsweise verarbeitet werden kann.

In einer bevorzugten Ausführungsform ist es vorgesehen, dass der Status jedes Vorgangsbearbeitungsmoduls (20) in regelmäßigen Zeitabständen abgefragt wird. Das Zeitintervall, nach dem jeweils eine Statusabfrage von dem Abfragemodul (60) vorgenommen wird, wird dabei in einer Konfigurationsdatei der Steuerungskomponente (90) angegeben.

Bei den Statusinformationen, die durch das Abfragemodul (60) beziehungsweise die Steuerungskomponenten (90) von einem Vorgangsbearbeitungsmodul (20) abgefragt werden können, handelt es sich vorzugsweise um Informationen darüber, ob das Vorgangsbearbeitungsmodul (20) eingeschaltet (online) oder ausgeschaltet (offline) ist. Ferner kann das Vorhandensein von Verbrauchsmaterial, wie beispielsweise Bearbeitungsmedien oder Tinte, überprüft werden, und es kann die Menge eines vorhandenen Verbrauchsmaterials abgefragt werden. Handelt es sich bei dem Vorgangsbearbeitungsmodul (20) um ein SparbuchVorgangsbearbeitungsmodul, kann so insbesondere ermittelt werden, ob ein Sparbuch in das Vorgangsbearbeitungsmodul eingelegt worden ist.

Wie bereits erläutert, erlauben die üblichen Vorgangsbearbeitungsmodul-Schnittstellen, wie beispielsweise die Schnittstelle IEEE 1284, keine gleichzeitige Datenübertragung von dem Computer zu einem Vorgangsbearbeitungsmodul (20) und von dem Vorgangsbearbeitungsmodul (20) zu dem Computer. Zu jedem Zeitpunkt ist jeweils nur eine der beiden Übertragungsrichtungen aktiviert.

Es ist daher nicht möglich, zur gleichen Zeit Bearbeitungsdaten an ein Vorgangsbearbeitungsmodul (20) zu übermitteln und Statusinformationen von diesem Vorgangsbearbeitungsmodul (20) abzufragen. Vielmehr ist eine Synchronisation der Übermittlung von Bearbeitungsdaten und der Abfrage von Statusinformationen erforderlich, die von dem Synchronisationsmodul (70) durchgeführt wird.

Insbesondere erfolgt dabei für jeden physischen Port (30) eine Synchronisation zwischen dem Main Thread und dem Status Thread, die diesem physischen Port (30) zugeordnet sind.

Um eine reibungslose Verarbeitung von Bearbeitungsaufträgen zu gewährleisten, erhält der Main Thread bei der Synchronisation eine Priorität, d. h. das Synchronisationsmodul (70) deaktiviert den Status Thread, wenn der zugehörige Main Thread aufgrund einer Datenübertragung an den physischen Port (30) aktiv ist.

In einer Ausführungsform der Erfindung wird die Synchronisation so durchgeführt, dass das Datenübertragungsmodul (50) zum Beginn und nach Abschluss einer Datenübertragung von einem logischen Port an einen physischen Port (30) durch einen bestimmten Main Thread unter Angabe einer Identifikation des entsprechenden Main Threads, bzw. des physischen Ports (30) eine Benachrichtigung darüber an das Synchronisationsmodul (70) übermittelt, dass die Datenübertragung begonnen bzw. beendet wird.

Diese Benachrichtigungen werden an das Abfragemodul (60) weitergeleitet, welches nach dem Empfang der Benachrichtigung den Status Thread ermittelt, der dem Main Thread entspricht. Dies ist der Status Thread, der Statusinformationen über den physischen Port (30) abfragt, an den der angegebene Main Thread Bearbeitungsdaten übermittelt.

Nach dem Erhalt einer Benachrichtigung über den Beginn einer Datenübertragung deaktiviert das Abfragemodul (60) den zuvor ermittelten Status Thread; nach dem Erhalt einer Benachrichtigung über den Abschluss einer Datenübertragung (und beim Systemstart) wird der zuvor ermittelte Status Thread aktiviert.

In dieser Ausführungsform entspricht das Synchronisationsmodul (70) im Wesentlichen einem Übergabepunkt zur Übergabe der Benachrichtigungen über den Beginn und den Abschluss einer Datenübertragung von dem Main Thread an den Status Thread.

In einer weiteren Ausführungsform der Erfindung kann es auch vorgesehen sein, dass das Synchronisationsmodul (70) als eine vollständig passive Komponente des Portmonitors (40) betrieben wird, in der lediglich der Status der Main Threads gespeichert wird. Ein Status Thread fragt in dieser Ausführungsform den Status des zugehörigen Main Threads von dem Synchronisationsmodul ab, bevor er eine Statusabfrage an ein Vorgangsbearbeitungsmodul (20) übermittelt und unterdrückt die Statusabfrage an das Vorgangsbearbeitungsmodul (20), falls der Main Thread aktiv ist.

Vorzugsweise ist das Synchronisationsmodul jedoch als vollständig aktive Komponente ausgebildet. In einer bevorzugten Ausgestaltung des Portmonitors (40) ist es vorgesehen, dass das Synchronisationsmodul (40) kontinuierlich den Status der Main Threads überwacht und die zugehörigen Status Threads deaktiviert, wenn eine Aktivierung der Main Threads festgestellt wird.

Die Zuordnung zwischen den Main Threads und den Status Threads wird in dieser Ausführungsform durch das Synchronisationsmodul vorgenommen. Dabei stellt das Synchronisationsmodul seinerseits Threads bereit, welche die Synchronisation vornehmen, wobei jeder dieser Threads genau einen Main Thread überwacht und einen Status Thread steuert.

Bei der bisherigen Darstellung des Synchronisationsmoduls (70) wurde davon ausgegangen, dass die Main Threads die Priorität gegenüber den Status Threads erhalten. Es ist jedoch selbstverständlich gleichfalls möglich, andere Prioritätsschemata vorzusehen. Beispielsweise kann der Status Thread die Priorität gegenüber dem Main Thread erhalten, wenn jederzeit aktuelle Statusinformationen über das Vorgangsbearbeitungsmodul benötigt werden, oder die Priorität kann dynamisch in Abhängigkeit vorgegebener Parameter, wie beispielsweise einer Prioritätsangabe in dem Bearbeitungsauftrag, angepasst werden. Der Fachmann erkennt dabei, in welcher Weise die vorbeschriebene Ausgestaltung des Synchronisationsmoduls (70) für die Verwendung anderer Prioritätsschemata abzuändern ist.

Die von einem Vorgangsbearbeitungsmodul (20) abgefragten Statusinformationen werden in einem Speichermittel (100) hinterlegt, das vorzugsweise als ein Shared Memory ausgeführt ist. Dabei handelt es sich um einen Speicherbereich in einem flüchtigen oder nicht-flüchtigen Speicher eines Computers, der einen standardisierten Zugriff durch mehrere Clients zulässt. Die Schnittstelle für den Zugriff auf das Shared Memory (100) wird dafür als eine Interprozesskommunikationsschicht (IPC-Schicht) ausgebildet.

Das Abfragemodul (60) des Portmonitors (40) greift dabei schreibend über die IPC-Schicht auf das Shared Memory (100) zu. Der Zugriff durch einen oder mehrere Clients, die Statusinformationen über die Vorgangsbearbeitungsmodule (20) abfragen, erfolgt lesend.

Innerhalb des Shared Memory (100) werden Speicherbereiche eingerichtet, die jeweils einem physischen Port (30) beziehungsweise einem Vorgangsbearbeitungsmodul (20) zugeordnet und mit einer entsprechenden Identifikationsangabe des physischen Ports (30) beziehungsweise des Vorgangsbearbeitungsmoduls (20) versehen sind. Jeder Speicherbereich des Shared Memory (100) wird somit von dem Status Thread beschrieben bzw. inhaltlich verändert, der dem entsprechenden physischen Port bzw. Vorgangsbearbeitungsmodul zugeordnet ist.

Der Zugriff auf das Shared Memory (100) erfolgt dabei anhand von Standardbefehlen zur Steuerung der Standardschnittstelle, die in dem Abfragemodul (60) gespeichert sind. Der Zugriff kann dabei von den Steuerungskomponenten (90) vorgenommen werden. Vorzugsweise werden die Steuerbefehle jedoch von einer separaten Komponente des Abfragemoduls (60) bereitgestellt und ausgeführt, um eine redundante Implementierung in jeder Steuerungskomponente (90) zu vermeiden. Dies gestattet insbesondere eine einfache Anpassung bei einer Veränderung der Standardschnittstelle.

In einer bevorzugten Ausführungsform der Erfindung ist es vorgesehen, dass die Statusinformationen innerhalb des Shared Memory (100) nur dann von einem Status Thread verändert werden, wenn der Status des zugehörigen Vorgangsbearbeitungsmoduls sich tatsächlich geändert hat. Dies ist jedoch in der Regel nicht bei jeder Statusabfrage der Fall. Vor der Speicherung der Statusinformationen für ein Vorgangsbearbeitungsmodul (20) vergleicht ein Status Thread die abgefragten Statusinformationen daher mit den in dem Shared Memory (100) gespeicherten Statusinformationen. Nach diesem Vergleich werden die Statusinformationen nur dann in das Shared Memory geschrieben, wenn sich die abgefragten Statusinformationen von den gespeicherten Statusinformationen unterscheiden.

Die Clients greifen ebenfalls über die Standardschnittstelle auf das Shared Memory (100) zu. Zur Erhöhung der Datensicherheit kann die Standardschnittstelle so konfiguriert sein, dass sie den Clients dabei ausschließlich lesenden Zugriff gewährt.

In dem betrachteten Ausführungsbeispiel ist es vorgesehen, dass der Vorgangsbearbeitungsmodul-Host (10) ein Client ist, der Statusinformationen aus dem Shared Memory (100) abruft. Den Programmen bzw. Programmmodulen zur Vorgangsbearbeitung werden die Statusinformationen durch den Vorgangsbearbeitungsmodul-Host zur Verfügung gestellt.

Dadurch ist es insbesondere möglich, die Erzeugung von Bearbeitungsaufträgen, die nicht verarbeitet werden können, durch diese Programme zu verhindern.

Wird beispielsweise die Einzahlung eines Geldbetrages auf ein Sparbuch oder die Auszahlung eines Geldbetrages von einem Sparbuch bearbeitet, ist es erforderlich, das neue Guthaben in das Sparbuch einzutragen. Vor der Erzeugung des entsprechenden Bearbeitungsauftrages fragt das Vorgangsbearbeitungsprogramm dabei die Statusinformationen über den zur Verarbeitung anstehenden Bearbeitungsauftrag ab und ermittelt anhand der Statusinformationen insbesondere, ob das SparbuchVorgangsbearbeitungsmodul online ist und ein Sparbuch in einen Sparbuchdrucker eingelegt worden ist.

Ist dies nicht der Fall, wird der Bearbeitungsauftrag zunächst nicht erzeugt, sondern es erfolgt eine Aufforderung zum Einschalten des Vorgangsbearbeitungsmoduls. Nach dem Empfang eines Quittierungssignals werden erneut Statusinformationen abgefragt.

Die Erzeugung des Bearbeitungsauftrages und seine Übermittlung an den Host-Rechner (10) erfolgt nur dann, wenn die Auswertung der Statusinformationen ergeben hat, dass sich ein Sparbuch in dem Sparbuchdrucker befindet.

Damit ist sichergestellt, dass kein Bearbeitungsauftrag erzeugt wird, der von dem Vorgangsbearbeitungsmodul nicht verarbeitet werden kann. Die Statusabfrage erhöht somit die Sicherheit des Vorgangs und ist zudem für den Bediener des Vorgangsbearbeitungsprogramms sehr komfortabel.

Analog kann beispielsweise vor der Erzeugung eines Ausdrucks von Postwertzeichen überprüft werden, ob ein Formularbogen für den Ausdruck in dem vorgesehenen Vorgangsbearbeitungsmodul vorhanden ist.

Die Erfindung ist jedoch nicht auf ein Datenverarbeitungssystem der beschriebenen Art beschränkt, sondern kann in analoger Weise in jedem Datenverarbeitungssystem eingesetzt werden, in dem Statusinformationen über die verwendeten Vorgangsbearbeitungsmodule benötigt werden.

### Bezugszeichenliste:

- 10: Host-Rechner
- 20: Vorgangsbearbeitungsmodul (VGA)
- 30: Physischer Port
- 40: Portmonitor
- 50: Datenübertragungsmodul
- 60: Abfragemodul
- 70: Synchronisationsmodul
- 80: Logischer Port
- 90: Steuerungskomponente (Business Logic)
- 100: Speichermittel (Shared Memory)

- AK: Adapterkomponente
- AM: Applikation-Manager
- BM: Berechtigungsmodul
- CF: Carbon Framework
- CH: Carbon Host
- CM: Context-Manager
- DC: Daten-Container
- DK: Daten-Komponente
- FK: Funktionskomponente
- IPC: Interprozesskommunikationsschicht
- RM: Recovery-Manager
- SM: Session-Manager
- USB: Universal Serial Bus
- VGA: Vorgangsbearbeitungsmodul
- ZK: Zugriffskomponente

## Patentansprüche

1. Datenverarbeitungssystem zum Verarbeiten von Transaktionsinformationen mit einem Speichermittel, wobei das Speichermittel als Shared Memory (100) durch einen Speicherbereich eines Computers gebildet ist, der Speicherbereich einen standardisierten Zugriff durch mehrere Clients zulässt und eine Schnittstelle für den Zugriff auf das Shared Memory (100) als Interprozesskommunikations-schicht (IPC-Schicht) ausgebildet ist, wobei das Datenverarbeitungssystem mehrere Vorgangsbearbeitungsmodule (20) enthält, wobei die Vorgangsbearbeitungsmodule (20) so ausgestaltet sind, dass sie Statusinformationen erfassen, wobei die von den Vorgangsbearbeitungsmodulen (20) erfassten Statusinformationen in dem Speichermittel hinterlegt werden und wobei innerhalb des Shared Memory (100) Speicherbereiche eingerichtet sind, die jeweils einem physischen Port (30) oder den Vorgangsbearbeitungsmodulen (20) zugeordnet sind,
**dadurch gekennzeichnet,**
- **dass** ein Status Thread vor der Speicherung der Statusinformationen für ein Vorgangsbearbeitungsmodul (20) abgefragte Statusinformationen mit den in dem Shared Memory (100) gespeicherten Statusinformationen vergleicht und dass nach diesem Vergleich die Statusinformationen nur dann in das Shared Memory (100) geschrieben werden, wenn sich die abgefragten Statusinformationen von den gespeicherten Statusinformationen unterscheiden, wobei der Status Thread die Speicherbereiche des Shared Memory (100) beschreibt und/oder inhaltlich verändert und wobei der Status Thread dem entsprechenden physischen Port beziehungsweise dem Vorgangsbearbeitungsmodul (20) zugeordnet ist,
- **dass** ferner ein Vorgangsbearbeitungsmodul (20) eine oder mehrere Komponenten zur Erfassung und/oder Bearbeitung von Daten enthält, wobei das Vorgangsbearbeitungsmodul (20) einen Vorgang oder eine Transaktion eines Gesamtsystems abbildet und wobei die Datenverbindung zwischen dem Computer und den Vorgangsbearbeitungsmodulen (20) über eine physikalische Schnittstelle hergestellt wird und
- **dass** das Datenverarbeitungssystem zudem ein Synchronisationsmodul (70) zum Synchronisieren der Abfrage von Statusinformationen von dem Vorgangsbearbeitungsmodul (20) und der Weiterleitung von Bearbeitungsdaten an das Vorgangsbearbeitungsmodul (20) umfasst, wobei das Synchronisationsmodul (70) entweder eine Abfrage von Statusinformationen oder eine Weiterleitung von Bearbeitungsdaten zulässt, wobei das Synchronisationsmodul (70) die Übertragungsrichtung zwischen dem Vorgangsbearbeitungsmodul (20) und dem Computer bestimmt und wobei zu jedem Zeitpunkt jeweils nur eine der beiden Übertragungsrichtungen aktiviert ist.

2. Datenverarbeitungssystem nach Anspruch 1,
**dadurch gekennzeichnet,**
**dass** das Synchronisationsmodul (70) einen Statusabfragestrang deaktiviert, wenn ein demselben Vorgangsbearbeitungsmodul (20) zugeordneter Datenübertragungsstrang aktiv ist.

3. Datenverarbeitungssystem nach Anspruch 1 oder 2,
**dadurch gekennzeichnet,**
**dass** die dem physischen Port (30) oder dem Vorgangsbearbeitungsmodul (20) zugeordneten Speicherbereiche mit einer entsprechenden Identifikationsangabe des physischen Ports (30) oder des Vorgangsbearbeitungsmoduls (20) versehen sind.

4. Datenverarbeitungssystem nach einem oder mehreren der vorangegangenen Ansprüche,
**dadurch gekennzeichnet,**
**dass** die Vorgangsbearbeitungsmodule (VGA) virtuelle Datencontainer enthalten, die jeweils einem Speicherbereich des Shared Memory (100) entsprechen.

5. Datenverarbeitungssystem nach einem oder mehreren der vorangegangenen Ansprüche,
**dadurch gekennzeichnet,**
**dass** die Vorgangsbearbeitungsmodule einen Datencontainer zum Speichern von Datenobjekten aufweisen.

6. Datenverarbeitungssystem nach einem oder mehreren der vorangegangenen Ansprüche,
**dadurch gekennzeichnet,**
**dass** die Datenobjekte Datenelementen zugeordnet sind.

7. Datenverarbeitungssystem nach Anspruch 6,
**dadurch gekennzeichnet,**
**dass** jedem Datenelement, das von einem der Vorgangsbearbeitungsmodule erfasst und/oder verarbeitet wird, ein Datenobjekt zugeordnet ist.

8. Datenverarbeitungssystem nach einem oder mehreren der vorangegangenen Ansprüche,
**dadurch gekennzeichnet**
**dass** wenigstens ein Datencontainer den gesamten Zustand eines in dem Bearbeitungsmodul erfolgenden Bearbeitungsvorgangs enthält.

9. Datenverarbeitungssystem nach einem oder mehreren der vorangegangenen Ansprüche,
**dadurch gekennzeichnet,**
**dass** Datenobjekte sowohl die Daten als auch Eigenschaften der Daten enthalten.

10. Datenverarbeitungssystem nach einem oder mehreren der vorangegangenen Ansprüche,
**dadurch gekennzeichnet,**
**dass** es ein Abfragemodul (60) enthält, dass das Abfragemodul eine Steuerungskomponente aufweist, dass die Steuerungskomponente Steuerbefehle zum Abfragen von Statusinformationen von dem Vorgangsbearbeitungsmodul enthält und dass das Abfragemodul die von dem Vorgangsbearbeitungsmodul empfangenen Statusinformationen in dem Speicherbereich speichert.

11. Datenverarbeitungssystem nach Anspruch 10,
**dadurch gekennzeichnet,**
**dass** der Speicherbereich durch wenigstens einen Client ausgelesen werden kann, um Statusinformationen über das Vorgangsbearbeitungsmodul zu erhalten.

12. Datenverarbeitungssystem nach Anspruch 10 oder 11,
**dadurch gekennzeichnet,**
**dass** das Abfragemodul (60) mehrere Statusabfragestränge bereitstellt, wobei jeder Statusabfragestrang Statusinformationen von genau einem dem Statusabfragestrang zugeordneten Vorgangsbearbeitungsmodul (20) abfragt.

13. Datenverarbeitungssystem nach Anspruch 12,
**dadurch gekennzeichnet,**
**dass** jedem Statusabfragestrang eine Steuerungskomponente (90) zugeordnet ist, die Steuerbefehle zum Abfragen von Statusinformationen von dem Vorgangsbearbeitungsmodul (20), enthält, der dem Statusabfragestrang zugeordnet ist.

14. Datenverarbeitungssystem nach einem oder mehreren der vorangegangenen Ansprüche,
**dadurch gekennzeichnet,**
**dass** ein Datenübertragungsmodul (50) mehrere Datenübertragungsstränge bereitstellt, wobei jeder Datenübertragungsstrang Bearbeitungsdaten an genau ein dem Datenübertragungsstrang zugeordneten Vorgangsbearbeitungsmodul (20) übermittelt.

15. Verfahren zum Verarbeiten von Transaktionsinformationen, wobei die Verarbeitung der Transaktionsinformationen in mehreren Vorgangsbearbeitungsmodulen (20) erfolgt,
wobei ferner die Vorgangsbearbeitungsmodule (20) Statusinformationen erfassen, und die von den Vorgangsbearbeitungsmodulen (20) erfassten Statusinformationen in einem als Shared Memory (100) gebildeten Speichermittel, das einen standardisierten Zugriff durch mehrere Clients zulässt, hinterlegt werden,
wobei eine Schnittstelle für den Zugriff auf das Shared Memory (100) als Interprozesskommunikationsschicht (IPC-Schicht) ausgebildet ist,
wobei das Hinterlegen so erfolgt, dass innerhalb des Speichermittels Speicherbereiche eingerichtet sind, die jeweils einem physischen Port (30) oder den Vorgangsbearbeitungsmodulen (20) zugeordnet sind,
**dadurch gekennzeichnet,**
**dass** ein Status Thread vor der Speicherung der Statusinformationen für ein Vorgangsbearbeitungsmodul (20) abgefragte Statusinformationen mit den in dem Shared Memory (100) gespeicherten Statusinformationen vergleicht und dass nach diesem Vergleich die Statusinformationen nur dann in das Shared Memory geschrieben werden, wenn sich die abgefragten Statusinformationen von den gespeicherten Statusinformationen unterscheiden,
wobei der Status Thread die Speicherbereiche des Shared Memory (100) beschreibt und/oder inhaltlich verändert
und wobei der Status Thread dem entsprechenden physischen Port beziehungsweise dem Vorgangsbearbeitungsmodul (20) zugeordnet ist,
**dass** ferner eine oder mehrere Komponenten des Vorgangsbearbeitungsmoduls (20) Daten erfasst und/oder bearbeitet
wobei das Vorgangsbearbeitungsmodul (20) einen Vorgang oder eine Transaktion eines Gesamtsystems abbildet
und wobei die Datenverbindung zwischen dem Computer und den Vorgangsbearbeitungsmodulen (20) über eine physikalische Schnittstelle hergestellt wird und dass die Abfrage von Statusinformationen von dem Vorgangsbearbeitungsmodul (20) und die Weiterleitung von Bearbeitungsdaten an das Vorgangsbearbeitungsmodul (20) durch ein Synchronisationsmodul (70) synchronisiert wird,
wobei das Synchronisationsmodul (70) entweder eine Abfrage von Statusinformationen oder eine Weiterleitung von Bearbeitungsdaten zulässt.
wobei das Synchronisationsmodul (70) die Übertragungsrichtung zwischen dem Vorgangsbearbeitungsmodul (20) und dem Computer bestimmt
und wobei zu jedem Zeitpunkt jeweils nur eine der beiden Übertragungsrichtungen aktiviert ist.

16. Verfahren nach Anspruch 15,
**dadurch gekennzeichnet,**
**dass** Clients über eine Standardschnittstelle auf das Shared Memory (100) zugreifen, wobei die Standardschnittstelle so konfiguriert ist, dass sie den Clients dabei ausschließlich lesenden Zugriff gewährt.

17. Verfahren nach Anspruch 16,
**dadurch gekennzeichnet,**
**dass** ein Vorgangsbearbeitungsmodul-Host (10) ein Client ist, der Statusinformationen aus dem Shared Memory (100) abruft und dass den Programmen und/oder Programmmodulen zur Vorgangsbearbeitung die Statusinformationen durch den Vorgangsbearbeitungsmodul-Host zur Verfügung gestellt werden.

## Claims

1. Data processing system for processing transaction information, having a storage means, whereby the storage means as a shared memory (100) is formed by a memory area of a computer, the memory area permits standardized access by several clients, and an interface for access to the shared memory (100) is configured as an inter-process communication layer (IPC layer), whereby the data processing system comprises several operation-processing modules (20), whereby the operation-processing modules (20) are configured in such a way that they detect status information, whereby the status information detected by the operation-processing module (20) is stored in the storage means, and whereby memory areas are set up within the shared memory (100) and are associated with a physical port (30) or with the operation-processing modules (20),
**characterized in that**
• before the status information is stored, a status thread compares status information queried for an operation-processing module (20) with the status information stored in the shared memory (100), and **in that**, after this comparison, the status information is only written into the shared memory (100) if the queried status information differs from the stored status information, whereby the status thread writes the memory areas of the shared memory (100) and/or changes its contents, and whereby the appropriate physical port or the operation-processing module (20) is associated with the status thread,
• moreover, an operation-processing module (20) comprises one or more components for detecting and/or processing data, whereby the operation-processing module (20) maps an operation or transaction of an entire system, and whereby the data connection between the computer and the operation-processing module (20) is established via a physical interface, and
• the data processing system also encompasses a synchronization module (70) to synchronize the query of status information from the operation-processing module (20) and to relay processing data to the operation-processing module (20), whereby the synchronization module (70) either permits a querying of status information or a relaying of processing data, whereby the synchronization module (70) determines the direction of transmission between the operation-processing module (20) and the computer, and whereby only one of the two directions of transmission is activated at any point in time.

2. The data processing system according to Claim 1,
**characterized in that**
the synchronization module (70) deactivates a status query thread if a data transmission thread associated with the same operation-processing module (20) is active.

3. The data processing system according to Claim 1 or 2,
**characterized in that**
the memory areas associated with the physical port (30) or with the operation-processing module (20) are provided with a corresponding identifier of the physical port (30) or of the operation-processing module (20).

4. The data processing system according to one or more of the preceding claims,
**characterized in that**
the operation-processing modules (VGA) contain virtual data containers that each correspond to a storage area of the shared memory (100).

5. The data processing system according to one or more of the preceding claims,
**characterized in that**
the operation-processing modules have a data container to store data objects.

6. The data processing system according to one or more of the preceding claims,
**characterized in that**
data elements are associated with the data objects.

7. The data processing system according to Claim 6,
**characterized in that**
a data object is associated with each data element that is detected and/or processed by one of the operation-processing modules.

8. The data processing system according to one or more of the preceding claims,
**characterized in that**
at least one data container contains the entire status of a processing operation that takes place in the processing module.

9. The data processing system according to one or more of the preceding claims,
**characterized in that**
data objects contain the data as well as properties of the data.

10. The data processing system according to one or more of the preceding claims,
**characterized in that**
it contains a query module (60), **in that** the query module has a control component, **in that** the control component comprises control commands to query status information from the operation-processing module, and **in that** the query module stores in the memory area the status information received from the operation-processing module.

11. The data processing system according to Claim 10,
**characterized in that**
the memory area can be read out by at least one client in order to obtain status information about the operation-processing module.

12. The data processing system according to Claim 10 or 11,
**characterized in that**
the query module (60) provides several status query threads, whereby each status query thread queries status information from precisely one operation-processing module (20) associated with the status query thread.

13. The data processing system according to Claim 12,
**characterized in that**
each status query thread is associated with a control component (90) that comprises control commands to query status information from the operation-processing module (20) that is associated with the status query thread.

14. The data processing system according to one or more of the preceding claims,
**characterized in that**
a data transmission module (50) provides several data transmission threads whereby each data transmission thread transfers processing data to precisely one operation-processing module (20) associated with the data transmission thread.

15. A method for processing transaction information, whereby the transaction information is processed in several operation-processing modules (20), whereby moreover, the operation-processing modules (20) detect status information, and the status information detected by the operation-processing modules (20) is stored in a storage means formed as a shared memory (100) that permits standardized access by several clients, whereby an interface for access to the shared memory (100) is configured as an inter-process communication layer (IPC layer), whereby the storage is done in such a way that memory areas are set up within the storage means and are each associated with a physical port (30) or with the operation-processing modules (20),
**characterized in that,**
before the status information is stored, a status thread compares status information queried for an operation-processing module (20) with the status information stored in the shared memory (100), and **in that**, after this comparison, the status information is only written into the shared memory (100) if the queried status information differs from the stored status information, whereby the status thread writes the memory areas of the shared memory (100) and/or changes its contents,
and whereby the appropriate physical port or the operation-processing module (20) is associated with the status thread,
**in that** moreover, one or more components detect and/or process data of the operation-processing module (20),
whereby the operation-processing module (20) maps an operation or transaction of an entire system,
and whereby the data connection between the computer and the operation-processing module (20) is established via a physical interface,
and **in that** the querying of status information from the operation-processing module (20) and the relaying of processing data to the operation-processing module (20) is synchronized by a synchronization module (70), whereby the synchronization module (70) permits either a querying of status information or a relaying of processing data,
whereby the synchronization module (70) determines the direction of transmission between the operation-processing module (20) and the computer, and whereby only one of the two directions of transmission is activated at any point in time.

16. The method according to Claim 15,
**characterized in that**
clients access the shared memory (100) via a standard interface, whereby the standard interface is configured in such a way that it permits exclusively read-only access to the clients.

17. The method according to Claim 16,
**characterized in that**
an operation-processing module host (10) is a client that retrieves status information from the shared memory (100), and **in that** the status information is made available by the operation-processing module host to the programs and/or program modules for operation processing.

## Revendications

1. Système de traitement de données pour le traitement d'informations de transaction avec un moyen de mémoire, le moyen de mémoire étant constitué sous la forme d'une mémoire partagée (100) par une zone de mémoire d'un ordinateur, la zone de mémoire permettant un accès standardisé par plusieurs clients et une interface pour l'accès à la mémoire partagée (100) se présentant sous la forme d'une couche de communication interprocessus (couche IPC), le système de traitement de données contenant plusieurs modules de traitement d'opérations (20), les modules de traitement d'opérations (20) étant réalisés de manière telle qu'ils saisissent des informations de statut, les informations de statut saisies par les modules de traitement d'opérations (20) étant déposées dans le moyen de mémoire et des zones de mémoire étant aménagées dans la mémoire partagée (100), lesquelles sont respectivement affectées à un port physique (30) ou aux modules de traitement d'opérations (20),
**caractérisé en ce que**
- une chaîne de statut (Status Thread)compare des informations de statut obtenues par interrogation pour un module de traitement d'opérations (20) avec les informations de statut stockées dans la mémoire partagée (100), avant le stockage des informations de statut, et **en ce que**, après cette comparaison, les informations de statut ne sont écrites dans la mémoire partagée (100) que si les informations de statut obtenues par interrogation sont différentes des informations de statut stockées, la chaîne de statut écrivant dans les zones de mémoire de la mémoire partagée (100) et/ou en modifiant le contenu et la chaîne de statut étant affectée au port physique correspondant ou respectivement au module de traitement d'opérations (20),
- un module de traitement d'opérations (20) contient en outre un ou plusieurs composants de saisie et/ou de traitement de données, le module de traitement d'opérations (20) représentant une opération ou une transaction d'un système global et la liaison de données entre l'ordinateur et les modules de traitement d'opérations (20) étant établie via une interface physique et
- le système de traitement de données comprenant en outre un module de synchronisation (70) pour synchroniser l'interrogation du module de traitement d'opérations (20) concernant des informations de statut et la retransmission de données de traitement au module de traitement d'opérations (20), le module de synchronisation (70) permettant soit une interrogation concernant des informations de statut soit une retransmission de données de traitement, le module de synchronisation (70) déterminant le sens de la transmission entre le module de traitement d'opérations (20) et l'ordinateur et seul l'un des deux sens de transmission étant respectivement activé à chaque instant.

2. Système de traitement de données selon la revendication 1, **caractérisé en ce que** le module de synchronisation (70) désactive une chaîne d'interrogation de statut lorsqu'une chaîne de transmission de données affectée au même module de traitement d'opérations (20) est active.

3. Système de traitement de données selon la revendication 1 ou 2, **caractérisé en ce que** les zones de mémoire affectées au port physique (30) ou au module de traitement d'opérations (20) sont pourvues d'une indication correspondante d'identification du port physique (30) ou du module de traitement d'opérations (20).

4. Système de traitement de données selon l'une ou plusieurs des revendications précédentes, **caractérisé en ce que** les modules de traitement d'opérations (VGA) contiennent des conteneurs virtuels de données qui correspondent chacun à une zone de mémoire de la mémoire partagée (100).

5. Système de traitement de données selon l'une ou plusieurs des revendications précédentes, **caractérisé en ce que** les modules de traitement d'opérations comportent un conteneur de données pour le stockage d'objets de données.

6. Système de traitement de données selon l'une ou plusieurs des revendications précédentes, **caractérisé en ce que** les objets de données sont associés à des éléments de données.

7. Système de traitement de données selon la revendication 6, **caractérisé en ce qu'**un objet de données est associé à chaque élément de données qui est saisi et/ou traité par l'un des modules de traitement d'opérations.

8. Système de traitement de données selon l'une ou plusieurs des revendications précédentes, **caractérisé en ce qu'**au moins un conteneur de données contient l'état complet d'une opération de traitement qui s'effectue dans le module de traitement.

9. Système de traitement de données selon l'une ou plusieurs des revendications précédentes, **caractérisé en ce que** les objets de données contiennent non seulement les données, mais aussi des caractéristiques des données.

10. Système de traitement de données selon l'une ou plusieurs des revendications précédentes, **caractérisé en ce qu'**il contient un module d'interrogation (60), **en ce que** le module d'interrogation comporte un composant de commande, **en ce que** le composant de commande contient des ordres de commande pour interroger le module de traitement d'opérations concernant des informations de statut et **en ce que** le module d'interrogation stocke dans la zone de mémoire les informations de statut reçues du module de traitement d'opérations.

11. Système de traitement de données selon la revendication 10, **caractérisé en ce que** la zone de mémoire peut être lue par au moins un client pour obtenir des informations de statut sur le module de traitement d'opérations.

12. Système de traitement de données selon la revendication 10 ou 11, **caractérisé en ce que** le module d'interrogation (60) fournit plusieurs chaînes d'interrogation de statut, chaque chaîne d'interrogation de statut interrogeant exactement un module de traitement d'opérations (20), associé à la chaîne d'interrogation de statut, concernant des informations de statut.

13. Système de traitement de données selon la revendication 12, **caractérisé en ce qu'**est associé, à chaque chaîne d'interrogation de statut, un composant de commande (90) qui contient des ordres de commande pour interroger sur des informations de statut le module de traitement d'opérations (20) qui est associé à la chaîne d'interrogation de statut.

14. Système de traitement de données selon l'une ou plusieurs des revendications précédentes, **caractérisé en ce qu'**un module de transmission de données (50) fournit plusieurs chaînes de transmission de données, chaque chaîne de transmission de données transmettant des données de traitement à exactement un module de traitement de données (20) associé à la chaîne de transmission de données.

15. Procédé de traitement d'informations de transaction, le traitement des informations de transaction s'effectuant dans plusieurs modules de traitement d'opérations (20), les modules de traitement d'opérations (20) saisissant en outre des informations de statut et les informations de statut saisies par les modules de traitement d'opérations (20) étant déposées dans un moyen de mémoire constitué sous la forme d'une mémoire partagée (100) et permettant un accès standardisé par plusieurs clients, une interface pour l'accès à la mémoire partagée (100) se présentant sous la forme d'une couche de communication interprocessus (couche IPC), le dépôt étant effectué de manière telle que sont aménagées, dans le moyen de mémoire, des zones de mémoire qui sont respectivement affectées à un port physique (30) ou aux modules de traitement d'opérations (20),
**caractérisé en ce que**
une chaîne de statut compare des informations de statut obtenues par interrogation pour un module de traitement d'opérations (20) avec les informations de statut stockées dans la mémoire partagée (100), avant le stockage des informations de statut, et **en ce que**, après cette comparaison, les informations de statut ne sont écrites dans la mémoire partagée (100) que si les informations de statut obtenues par interrogation sont différentes des informations de statut stockées,
la chaîne de statut écrivant dans les zones de mémoire de la mémoire partagée (100) et/ou en modifiant le contenu et
la chaîne de statut étant affectée au port physique correspondant ou respectivement au module de traitement d'opérations (20),
en outre, un ou plusieurs composants du module de traitement d'opérations (20) saisissent et/ou traitent des données,
le module de traitement d'opérations (20) représentant une opération ou une transaction d'un système global et
la liaison de données entre l'ordinateur et les modules de traitement d'opérations (20) étant établie via une interface physique, et l'interrogation du module de traitement d'opérations (20) concernant des informations de statut et la retransmission de données de traitement au module de traitement d'opérations (20) sont synchronisées par un module de synchronisation (70),
le module de synchronisation (70) permettant soit une interrogation concernant des informations de statut soit une retransmission de données de traitement,
le module de synchronisation (70) déterminant le sens de la transmission entre le module de traitement d'opérations (20) et l'ordinateur et seul l'un des deux sens de transmission étant respectivement actif à chaque instant.

16. Procédé selon la revendication 15, **caractérisé en ce que** des clients accèdent à la mémoire partagée (100) via une interface standard, l'interface standard étant configurée de manière telle qu'elle accorde aux clients un accès en lecture seule.

17. Procédé selon la revendication 16, **caractérisé en ce qu'**un hôte de module de traitement d'opérations (10) est un client qui interroge la mémoire partagée (100) concernant des informations de statut et **en ce que** l'hôte de module de traitement d'opérations met les informations de statut à la disposition des programmes et/ou des modules de programme pour le traitement d'opérations.
